# EUROPÄISCHE PATENTANMELDUNG

(11) **EP 1 106 961 A2**
(43) Veröffentlichungstag der Anmeldung: **13.06.2001**
(21) Anmeldenummer: 00125621.3
(22) Anmeldetag: 23.11.2000
(51) Int. Cl.: G01B 3/10

(54) **Messband für Hand- und Armmessung**

(30) Priorität: 08.12.1999 DE 19958972
(71) Anmelder: Jobst GmbH, 46446 Emmerich (DE)
(72) Erfinder: Gattwinkel, Angelika, 33649 Bielefeld (DE); Zimmermann von, Hans A., 46446 Emmerich (DE)
(74) Vertreter: Dinné, Erlend

(57) **Zusammenfassung**

Maßband für die Hand- und Armmessung, bestehend aus einem sich automatisch in ein Gehäuse ziehendes Band, das eine Linealskalierung aufweist, wobei an dem außerhalb des Gehäuses befindlichen Ende des Bandes eine einstellbare Fingerschlaufe vorhanden ist.

## Beschreibung

Die Erfindung betrifft ein Maßband, das zum Vermessen der Hand beziehungsweise des Arms eingesetzt wird, wobei die aus der Messung gewonnenen Daten zur Herstellung eines Kompressionshandschuhs verwendet werden.

Zur Fertigung eines Kompressionshandschuhs mit oder ohne Armteil oder eines Kompressionsstrumpfes müssen vom betreffenden Körperteil gewisse, standardisierte Maße abgenommen werden, die dann die Grundlage zur Anfertigung des Handschuhs beziehungsweise des Strumpfes bilden. Bisher ist zur Längenbestimmung ein Maßband verwendet werden, bevorzugt ein solches mit einer Vorrichtung, die das Maßband selbsttätig in ein Gehäuse zurückzieht.

Es gibt konkrete Meßvorschriften, nach denen vorgegangen wird. Es werden Fixpunkte am betreffenden Körperteil eingezeichnet, deren Abstand anschließend vermessen wird.

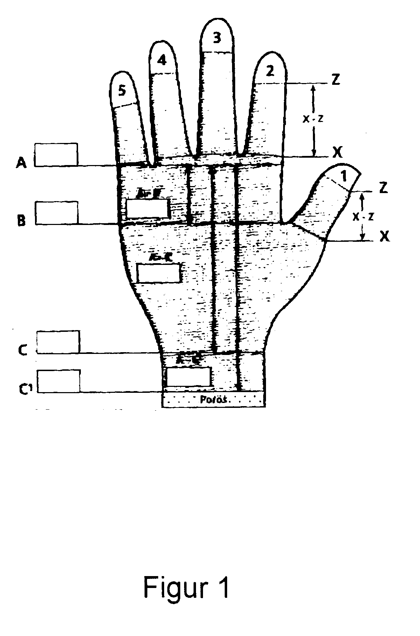

In der Figur 1 ist gezeigt, welche Punkte auf der Hand vorgegeben und welche Maße bestimmt werden.

Die Handinnenfläche des Patienten weist nach oben. Es wird die Innenseite der Hand gemessen, nicht der Handrücken, und die Finger sollten leicht auseinander liegen (wie in der Figur 1). Da die Hand empfindlich auf Druck reagiert, sollte das Maßband nicht zu straff gezogen werden. Die Figur 1 gibt die Meßpunkte an.

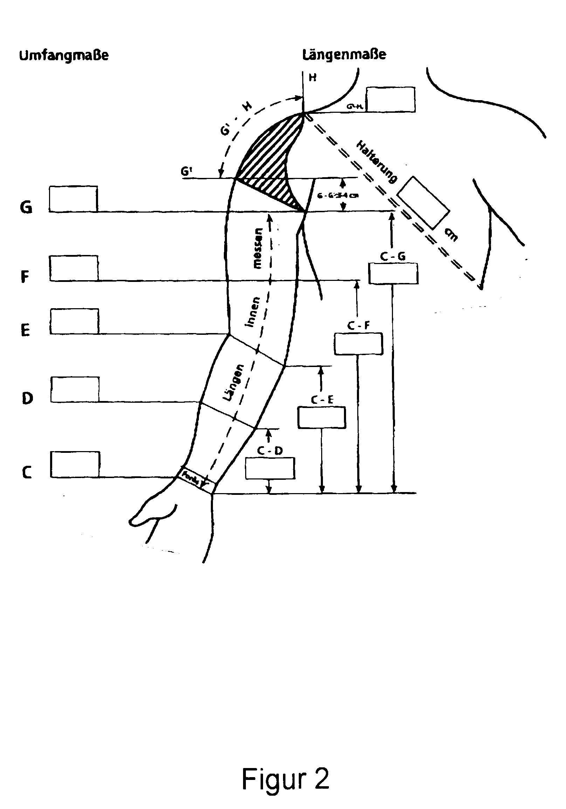

Folgende Abfolge an Meßschritten muß eingehalten werden:
**SCHRITT 1**
   Markierung der Meßpunkte A, B, C und C¹ und Notierung der Längen A-B, A-C und A-C¹.
**SCHRITT 2**
   Messen des Umfangs bei A.
**SCHRITT 3**
   Messen des Umfangs bei B und des Abstandes zwischen den Ebenen A und B.
**SCHRITT 4**
   Messen des Umfangs bei C und des Abstandes zwischen den Ebenen A und C.
**SCHRITT 5**
   Messen des Umfangs bei C¹, also an der Kante des anzufertigenden Handschuhs oder an der proximalen Seite des Speichenknochens oder dort, wo der Handschuh enden soll, sowie des Abstandes zwischen den Ebenen A und C¹.
   Das Hauptindikationsgebiet für Armstrümpfe ist die zweite Phase der Lymphödemtherapie mit dem Ziel, das in der ersten Phase der physikalischen Entstauungstherapie erzielte Ergebnis langfristig zu sichern und zu optimieren. Damit der Armstrumpf exakt sitzt und therapeutisch wirksam ist, muß auch dieser genau angemessen werden. In der Figur 2 ist gezeigt, welche Punkte auf dem Arm vorgegeben und welche Maße bestimmt werden.
**SCHRITT 1**
   Markierung der Meßpunkte C, D, E, F, G.
**SCHRITT 2**
   Messen des Umfangs an der Handwurzel bei C und des Umfangs auf Unterarmmitte bei D sowie Bestimmung der Länge C-D von der Handwurzel bis zur Unterarmmitte.
**SCHRITT 3**
   Messen des Umfangs E in der Armbeuge, bei leichter Beugung des Ellenbogengelenks gemessen, sowie Bestimmung der Länge C-E von der Handwurzel bis zur Ellenbeuge.
**SCHRITT 4**
   Messen des Umfangs F auf Oberarmmitte sowie Bestimmung der Länge C-F von der Handwurzel bis zur Oberarmmitte.
**SCHRITT 5**
   Messen des Umfangs des Oberarms G ca. 2 Zentimeter unterhalb der Achsel sowie Bestimmung der Länge C-G von der Handwurzel bis 2 Zentimeter unter der Achsel.
   Bei oben abgeschrägten Armstrümpfen werden zusätzlich das G¹-Maß und die Länge C-G¹ ermittelt, bei Armstrümpfen mit Kappe und BH-Befestigung außerdem die Länge G-H:
**SCHRITT 6**
   Zunächst wird um den Oberarm ein weiches, dünnes Kartonstück gelegt. In Abhängigkeit von der Schmerzempfindlichkeit wird der Punkt G bestimmt und damit die Länge des Strumpfes. Der Meßpunkt G¹ liegt etwa 3 bis 4 Zentimeter oberhalb des Meßpunktes G.
**SCHRITT 7**
   Bestimmung der Länge C- G¹, die sich aus der Länge C-G plus etwa 3 bis 4 Zentimeter ergibt.
**SCHRITT 8**
   Bestimmung der Länge G-H, wobei der Meßpunkt H etwa in Schultermitte liegt und den äußeren Rand des BHs bezeichnet. Zusätzlich wird die Trägerbreite vermerkt.

Zur Herstellung eines Kompressionshandschuhes und -armstrumpfes müssen Hand und Arm fachgerecht vermessen werden. Dies geschieht, indem definierte Meßpunkte beziehungsweise Meßebenen bestimmt und markiert werden. Anschließend werden mittels eines Maßbandes die Länge und der Umfang an diesen Punkten in getrennten Arbeitsgängen ermittelt. Bei einer Kontrollmessung beziehungsweise Messung für eine Nachversorgung werden anhand des dokumentierten Maßschemas diese Meßpunkte wieder aufgesucht, erneut markiert und neu vermessen.

Aufgabe der Erfindung ist es, ein Maßband zur Verfügung zu stellen, das reproduzierbare Meßwerte bei der Ausmessung von Fingern garantiert.

Gelöst wird diese Aufgabe durch ein Maßband, wie es in Anspruch 1 dargelegt ist. Weiterbildungen des erfindungsgemäßen Maßbandes sind dabei Gegenstand der Unteransprüche.

Demgemäß betrifft die Erfindung ein Maßband für die Hand- und Armmessung, bestehend aus einem sich automatisch in ein Gehäuse ziehendes Band, das eine Linealskalierung aufweist, wobei an dem außerhalb des Gehäuses befindlichen Ende des Bandes eine einstellbare Fingerschlaufe vorhanden ist.

In einer ersten bevorzugten Ausführungsform ist auf dem Band auf der Vorder- und auf der Rückseite eine Linealskalierung vorhanden.

Weiterhin ist vorteilhaft, wenn die Einteilung der Linealskalierung in Zentimetern erfolgt.

In einer weiteren Ausführungsform des Meßbandes ist auf der Vorderseite eine Linealskalierung in Zentimetereinteilung und auf der Rückseite eine Linealskalierung in Zolleinteilung vorhanden.

Die erfindungsgemäße Schlaufe, die insbesondere am Finger eingesetzt wird, sollte einstellbar sein, da die Fingerdicken sehr unterschiedlich sein können und dennoch immer derselbe Anfangspunkt am Fingergrundgelenk eingestellt werden muß.

Die Maßbandlänge beträgt ungefähr 100 cm.

Folgende Schritte bei der Ausmessung eines Fingers sind einzuhalten, um reproduzierbare Werte zu realisieren:
- Maßband an der Innenseite der Hand und des Arm anlegen.
- Schlaufe um den gewählten Finger so einstellen, daß Nullpunkt des Maßbandes mit Meßlinie A übereinstimmt.
- Patient unterstützt durch leichtes Ziehen und Andrücken des Maßbandes auf dem leicht angewinkelten Arm den Meßvorgang, während der Maßnehmende in einem Arbeitsgang Längen- und Umfangmaße bestimmt.

Die einmal festgelegten und dokumentierten Meßpunkte können sicher und zweifelsfrei - auch von einer anderen Person - wieder bestimmt werden. Dies ermöglicht eine einwandfreie Längenbestimmung der Meßpunkte zur Maßkontrolle bei Nachbestellungen beziehungsweise Reklamationen. Diese Methode kann auch vom Arzt und/oder Therapeuten zur Kontrolle der Umfangsmaße und Volumenbestimmung eingesetzt werden. Sinnvoll kann hierbei ein personifiziertes Maßband mit dauerhaften Markierungen der festgestellten Meßebenen sein, welches zum Beispiel der Krankenakte beigefügt werden kann.

## Patentansprüche

1. Maßband für die Hand- und Armmessung, bestehend aus einem sich automatisch in ein Gehäuse ziehendes Band, das eine Linealskalierung aufweist, wobei an dem außerhalb des Gehäuses befindlichen Ende des Bandes eine einstellbare Fingerschlaufe vorhanden ist.

2. Maßband nach Anspruch 1, dadurch gekennzeichnet, daß auf dem Band auf der Vorder- und auf der Rückseite eine Linealskalierung vorhanden ist.
